# EUROPEAN PATENT SPECIFICATION

(11) **EP 1 954 757 B1**
(45) Date of publication and mention of the grant of the patent: **29.11.2017**
(21) Application number: 06838541.8
(22) Date of filing: 29.11.2006
(51) Int. Cl.: C08L 33/04, C08L 33/06

(54) **WEATHERABLE, HIGH MODULUS POLYMER COMPOSITIONS AND METHOD**
WITTERUNGSBESTÄNDIGE, HOCHMODULIGE POLYMERZUSAMMENSETZUNGEN UND VERFAHREN
COMPOSITIONS POLYMERES DE MODULE ELEVE RESISTANT AUX INTEMPERIES ET PROCEDE CORRESPONDANT

(30) Priority: 30.11.2005 US 290067
(43) Date of publication of application: 13.08.2008
(73) Proprietor: SABIC Global Technologies B.V., 4612 PX Bergen op Zoom (NL)
(72) Inventor: GAGGAR, Satish, Kumar, Parkersburg, WV 26101 (US); DHAWAN, Sandeep, Vienna, WV 26105 (US)
(74) Representative: Modiano, Micaela Nadia
(86) International application number: PCT/US2006/045636
(87) International publication number: WO 2007/064676

(56) References cited:
- US-A- 3 005 795
- US-A- 3 294 871
- US-A- 5 679 741

## Description

### BACKGROUND

The present invention relates to weatherable high modulus polymer compositions with improved ductility derived from rigid thermoplastic resins. Rigid, weatherable thermoplastic resins such as PMMA and MMASAN are known to be brittle with low impact strength. For many applications there is a need to improve the modulus of such base resins and at the same time provide enhanced ductility. Traditionally fillers such as glass fibers are used for modulus enhancement in polymer compositions, but ductility remains low and the surface appearance of molded parts is often poor, thus limiting their applications. Such compositions can also cause damage to compounding and molding equipment due to the presence of abrasive glass fibers. U.S. Patent No. 5,962,587 discloses the use of polytetrafluoroethylene (PTFE) to improve the modulus of rubber modified thermoplastic resin compositions. These compositions also comprise a rubber component. US 3,294,871 relates to a process for the production of synthetic molding compositions composed of polytetrafluoroethylene and rigid thermoplastic polymers. US 3,005,795 relates to rigid thermoplastic polymers which contain particles of polytetrafluoroethylene resin dispersed throughout. Commonly owned U.S. Patent application Serial No. 2005/0143508, filed June 30, 2005, discloses the use of PTFE to improve the modulus of thermoplastic resin compositions. These compositions also comprise a filler.

There is a need for developing polymer compositions derived from rigid thermoplastic resins, the compositions having high modulus and smooth molded surfaces without surface defects and without the presence of filler components. There is also a need for developing polymer compositions derived from rigid thermoplastic resins, the compositions having enhanced ductility without the presence of a rubber component.

### BRIEF DESCRIPTION

In a first aspect, the present invention provides a composition comprising:
(i) a rigid thermoplastic resin comprising structural units derived from a (C₁-C₁₂)alkyl (meth)acrylate monomer, and optionally a second monomer selected from the group consisting of a vinyl aromatic monomer, a monoethylenically unsaturated nitrile monomer and mixtures thereof, and
(ii) a fluoropolymer additive comprising 30 wt.% to 70 wt.% of a fluoropolymer and 70 wt.% to 30 wt.% of a carrier polymer comprising structural units derived from a vinyl aromatic monomer, a monoethylenically unsaturated nitrile monomer, or mixtures thereof, wherein the amount of fluoropolymer present in the composition is in a range of 2 parts by weight to 25 parts by weight based on 100 parts by weight of the composition, and wherein the composition is free of both any rubber component and any filler.

In a second aspect, the present invention provides a method for increasing either the modulus or the impact strength of a composition comprising a rigid thermoplastic resin comprising structural units derived from a (C₁-C₁₂) alkyl(meth)acrylate monomer, and optionally a second monomer selected from the group consisting of a vinyl aromatic monomer, a monoethylenically unsaturated nitrile monomer and mixtures thereof, which comprises the steps of:
(i) combining the composition with a fluoropolymer additive comprising 30 wt.% to 70 wt.% of a fluoropolymer and 70 wt.% to 30 wt.% of a carrier polymer comprising structural units derived from a vinyl aromatic monomer, a monoethylenically unsaturated nitrile monomer, or mixtures thereof, wherein the amount of fluoropolymer present in the composition is in a range of from 2 parts by weight to 25 parts by weight based on 100 parts by weight of the composition, and
(ii) processing the composition from (i) at a temperature less than the melting point of the fluoropolymer; wherein the composition is free of both any rubber component and any filler.

In a third aspect, the present invention provides articles formed from the composition of the invention.

In one embodiment of the invention, the structural units of the rigid thermoplastic resin are derived from methyl methacrylate.

In another embodiment of the invention, the structural units of the rigid thermoplastic resin are derived from methyl methacrylate, styrene, and acrylonitrile.

The composition of the present invention can further comprise styrene-acrylonitrile copolymer.

In one embodiment of the present invention the fluoropolymer is polytetrafluoroethylene and the carrier polymer is selected from the group consisting of polystyrene, poly-alpha-alkylstyrene, poly-alpha-methylstyrene, maleic anhydride-modified styrenic polymers, styrene/maleic anhydride copolymers, maleimide-modified styrenic polymers, styrene/N-aryl maleimide copolymers, styrene/N-phenyl maleimide copolymers, styrene/acrylonitrile copolymers, alpha-alkylstyrene/acrylonitrile copolymers, alpha-methylstyrene/acrylonitrile copolymers, styrene/alpha-alkylstyrene/acrylonitrile copolymers, styrene/alpha-methylstyrene/acrylonitrile copolymers, styrene/acrylonitrile/methyl methacrylate copolymers, styrene/alpha-alkylstyrene/acrylonitrile/methyl methacrylate copolymers, styrene/alpha-methylstyrene/acrylonitrile/methyl methacrylate copolymers, alpha-alkylstyrene/acrylonitrile/methyl methacrylate copolymers, and alpha-methylstyrene/acrylonitrile/methyl methacrylate copolymers.

The composition of the present invention can further comprise an additive selected from the group consisting of lubricants, neutralizers, stabilizers, heat stabilizers, light stabilizers, antioxidants, UV screeners, UV absorbers, dyes, pigments, colorants, and mixtures thereof.

In one embodiment of the present invention the composition is processed at a temperature less than the melting point of the fluoropolymer, and the fluoropolymer is at least partially dispersed in the composition as fibrils after processing of the composition.

In the method of the invention, the composition can be for example processed at a temperature of less than about 325°C.

In the method of the invention, the fluoropolymer can be at least partially dispersed in the composition as fibrils after processing of the composition

Embodiments disclosed in the present disclosure which do not fall within the scope of the appended claims are not embodiments of the present disclosure and are disclosed for reference only.

In one embodiment the disclosure comprises a composition comprising (i) a rigid thermoplastic resin comprising structural units derived from a (C₁-C₁₂)alkyl (meth)acrylate monomer, and optionally a second monomer selected from the group consisting of a vinyl aromatic monomer, a monoethylenically unsaturated nitrile monomer and mixtures thereof, and (ii) 2 parts by weight to 25 parts by weight of a fluoropolymer; wherein the composition is free of both any rubber component and any filler.

In another embodiment the disclosure comprises a method for increasing either the modulus or the impact strength of a composition comprising a rigid thermoplastic resin comprising structural units derived from a (C₁-C₁₂)alkyl (meth)acrylate monomer, and optionally a second monomer selected from the group consisting of a vinyl aromatic monomer, a monoethylenically unsaturated nitrile monomer and mixtures thereof, which comprises the steps of: (i) combining the composition with from 2 parts by weight to 25 parts by weight of a fluoropolymer, and (ii) processing the composition from (i) at a temperature less than the melting point of the fluoropolymer; wherein the composition is free of both any rubber component and any filler.

In still another embodiment the disclosure comprises articles made from compositions of the disclosure. Various other features, aspects, and advantages of the present invention will become more apparent with reference to the following description and appended claims.

### BRIEF DESCRIPTION OF THE DRAWINGS

Figure 1 shows a micrograph of a composition comprising 5 wt.% PTFE in PMMA wherein the composition was processed at a temperature of less than about 325°C.
Figure 2 shows a micrograph of a composition comprising 5 wt.% PTFE in MMASAN wherein the composition was processed at a temperature of less than about 325°C.

### DETAILED DESCRIPTION

In the following specification and the claims which follow, reference will be made to a number of terms which shall be defined to have the following meanings. The singular forms "a", "an" and "the" include plural referents unless the context clearly dictates otherwise. The terminology "(meth)acrylate" refers collectively to acrylate and methacrylate; for example, the term "(meth)acrylate monomers" refers collectively to acrylate monomers and methacrylate monomers.

Polymer compositions in embodiments of the disclosure comprise at least one rigid thermoplastic resin. Illustrative rigid thermoplastic resins comprise those with structural units derived from one or more monomers selected from the group consisting of (C₁-C₁₂)alkyl (meth)acrylate monomers. Optionally, the rigid thermoplastic resin may further comprise structural units derived from a vinyl aromatic monomer, or a monoethylenically unsaturated nitrile monomer, or mixtures thereof. In embodiments of the disclosure the rigid thermoplastic resins are free of any rubber component.

As used herein, the term "(C₁-C₁₂)alkyl" means a straight or branched alkyl substituent group having from 1 to 12 carbon atoms per group, and includes, for example, methyl, ethyl, n-butyl, sec-butyl, t-butyl, n-propyl, iso-propyl, pentyl, hexyl, heptyl, octyl, nonyl, decyl, undecyl and dodecyl. Suitable (C₁-C₁₂)alkyl (meth)acrylate monomers include (C₁-C₁₂)alkyl acrylate monomers, for example, ethyl acrylate, butyl acrylate, iso-pentyl acrylate, n-hexyl acrylate, 2-ethyl hexyl acrylate, and their (C₁-C₁₂)alkyl methacrylate analogs, such as, for example, methyl methacrylate (MMA), ethyl methacrylate, propyl methacrylate, iso-propyl methacrylate, butyl methacrylate, hexyl methacrylate, and decyl methacrylate.

Suitable vinyl aromatic monomers include, for example, styrene and substituted styrenes having one or more alkyl, alkoxyl, hydroxyl or halo substituent groups attached to the aromatic ring, including, for example, alpha-methyl styrene, p-methyl styrene, vinyl toluene, vinyl xylene, trimethyl styrene, butyl styrene, chlorostyrene, dichlorostyrene, bromostyrene, p-hydroxystyrene, methoxystyrene and vinyl-substituted condensed aromatic ring structures, such as, for example, vinyl naphthalene and vinyl anthracene, as well as mixtures of vinyl aromatic monomers. As used herein, the term "monoethylenically unsaturated nitrile monomer" means an acyclic compound that includes a single nitrile group and a single site of ethylenic unsaturation per molecule, and includes, for example, acrylonitrile, methacrylonitrile, and alpha-chloro acrylonitrile.

In a particular embodiment the rigid thermoplastic resin comprises poly(methyl methacrylate) (PMMA). As is well known in the art, PMMA may be produced by the polymerization of methyl methacrylate monomer to form a homopolymer. PMMA homopolymer exists in its pure form only theoretically and is generally available commercially as a mixture of the homopolymer and one or more copolymers of methyl methacrylate with C₁-C₄ alkyl acrylates, such as ethyl acrylate. Such commercially available PMMA copolymers contain structural units derived from methyl methacrylate and from about 1 percent to about 30 percent by weight of one or more C₁-C₄ alkyl acrylates. In some embodiments the rigid thermoplastic resin comprises a mixture of PMMA and at least one additional rigid thermoplastic resin comprising structural units derived from at least one vinyl aromatic monomer and at least one monoethylenically unsaturated nitrile monomer, wherein PMMA is present is an amount in a range of between 1 wt.% and 99 wt.% based on the total weight of the rigid thermoplastic resin. In a particular embodiment the rigid thermoplastic resin comprises a mixture of PMMA and styrene-acrylonitrile copolymer (SAN).

In another particular embodiment the rigid thermoplastic resin comprises a copolymer comprising structural units derived from methyl methacrylate and at least one of styrene or acrylonitrile. In still another particular embodiment the rigid thermoplastic resin comprises a copolymer comprising structural units derived from methyl methacrylate, and styrene and acrylonitrile (often referred to herein as MMASAN), and the range of ratios of MMA:S:AN in the MMASAN is from about 80/15/5 to about 30/50/20. In one embodiment MMASAN comprises structural units derived from about 80% MMA, 15% styrene, and 5% acrylonitrile; in another embodiment, about 60% MMA, 30% styrene and 10% acrylonitrile; and in still another embodiment, about 45% MMA, 40% styrene and 15% acrylonitrile. In still another particular embodiment MMASAN comprises structural units derived from about 35 wt.% MMA, 40 wt.% styrene, and 25 wt.% acrylonitrile. The molecular weight of the MMASAN resin, either as homopolymer or copolymer, can range from about 50,000 to about 450,000, and particularly from about 100,000 to about 250,000 as a weight average molecular weight. In some embodiments the rigid thermoplastic resin comprises a mixture of MMASAN and at least one additional rigid thermoplastic resin comprising structural units derived from at least one vinyl aromatic monomer and at least one monoethylenically unsaturated nitrile monomer, wherein MMASAN is present is an amount in a range of between 1 wt.% and 99 wt.% based on the total weight of the rigid thermoplastic resin. In a particular embodiment the rigid thermoplastic resin comprises a mixture of MMASAN and SAN.

Suitable fluoropolymers and methods for making such fluoropolymers are known, as described for example, in U.S. Patent Nos. 3,671,487 and 3,723,373. Suitable fluoropolymers include homopolymers and copolymers that comprise repeating units derived from one or more fluorinated olefin monomers. The term "fluorinated-olefin monomer" means an olefin monomer that includes at least one fluorine atom substituent. Suitable fluorinated olefin monomers comprise fluoroethylenes including, but are not limited to, CF₂=CF₂, CHF=CF₂, CH₂=CF₂, CH₂=CHF, CClF=CF₂, CCl₂=CF₂, CClF=CClF, CHF=CCl₂, CH₂=CClF, and CCl₂=CClF and fluoropropylenes including, but are not limited to, CF₃CF=CF₂, CF₃CF=CHF, CF₃CH=CF₂, CF₃CH=CH₂, CHF₂CF=CHF, CHF₂CH=CHF and CHF₂CH=CH₂. In a particular embodiment, the fluorinated olefin monomer comprises one or more of tetrafluoroethylene, chlorotrifloroethylene, vinylidene fluoride or hexafluoropropylene. Suitable fluorinated olefin homopolymers include for example, poly(tetrafluoroethylene) and poly(hexafluoroethylene).

Suitable fluorinated olefin copolymers include copolymers comprising repeating units derived from two or more fluorinated olefin monomers such as, for example, poly(tetrafluoroethylene-hexafluoroethylene), and copolymers comprising structural units derived from one or more fluorinated monomers and one or more non-fluorinated monoethylenically unsaturated monomers that are copolymerizable with the fluorinated monomers, including, but are not limited to, poly(tetrafluoroethylene-ethylene-propylene) copolymers. Suitable non-fluorinated monoethylenically unsaturated monomers comprise olefin monomers including, but are not limited to, ethylene, propylene, butene, acrylate monomers such as, for example, methyl methacrylate and butyl acrylate, vinyl ethers, such as, for example, cyclohexyl vinyl ether, ethyl vinyl ether, and n-butyl vinyl ether, and vinyl esters such as, for example, vinyl acetate and vinyl versatate. In particular embodiments suitable fluoropolymers comprise polytetrafluoroethylene (PTFE), perfluoropolyethers, and fluoroelastomers. In other particular embodiments suitable fluoropolymers are in particulate form or in fibrous form. In another particular embodiment suitable fluoropolymers are in particulate form with particles ranging in size in one embodiment from about 50 nanometers (nm) to about 500 nm, and in another embodiment from about 150 nm to about 400 nm, as measured by electron microscopy.

In some embodiments a fluoropolymer is combined with the rigid thermoplastic resin in the form of a fluoropolymer additive that comprises both fluoropolymer and a second rigid thermoplastic polymer, sometimes referred to herein after as a "carrier polymer". Illustrative examples of carrier polymer comprise those with structural units derived from a vinyl aromatic monomer, or a monoethylenically unsaturated nitrile monomer, or a (C₁-C₁₂)alkyl (meth)acrylate monomer, or mixtures thereof. Particular examples of the carrier polymer include, but are not limited to, polystyrene, poly-alpha-alkylstyrene, poly-alpha-methylstyrene, maleic anhydride-modified styrenic polymers, styrene/maleic anhydride copolymers, maleimide-modified styrenic polymers, styrene/N-aryl maleimide copolymers, styrene/N-phenyl maleimide copolymers, styrene/acrylonitrile copolymers, alpha-alkylstyrene/acrylonitrile copolymers, alpha-methylstyrene/acrylonitrile copolymers, styrene/alpha-alkylstyrene/acrylonitrile copolymers, styrene/alpha-methylstyrene/acrylonitrile copolymers, styrene/acrylonitrile/methyl methacrylate copolymers, styrene/alpha-alkylstyrene/acrylonitrile/methyl methacrylate copolymers, styrene/alpha-methylstyrene/acrylonitrile/methyl methacrylate copolymers, alpha-alkylstyrene/acrylonitrile/methyl methacrylate copolymers, and alpha-methylstyrene/acrylonitrile/methyl methacrylate copolymers. In another particular embodiment the fluoropolymer additive comprises from 30 wt.% to 70 wt.%, more particularly from 40 wt.% to 60 wt.%, fluoropolymer, and from 30 wt.% to 70 wt.%, more particularly from 40 wt.% to 60 wt.%, carrier polymer based on the total weight of the fluoropolymer additive.

The fluoropolymer additive may be made by combining a fluoropolymer, for example, in the form of an aqueous dispersion of fluoropolymer particles, with a carrier polymer, precipitating the combined fluoropolymer particles and carrier polymer, and then drying the precipitate to form the fluoropolymer additive. In a particular embodiment the fluoropolymer additive particles range in size from 50 nm to 500 nm, as measured by electron microscopy. In another particular embodiment the aqueous fluoropolymer dispersion comprises water and from 1 part by weight (pbw) to 80 pbw, based on 100 pbw of the dispersion, of fluoropolymer and from 0.1 pbw to 10 pbw, based on 100 pbw of the fluoropolymer, of a fatty acid salt of the structural formula R¹COOH where R¹ is H, alkyl, cycloalkyl, aryl or HOOC--(CHₓ)ₙ--; wherein x=0, 1, or 2; and n=0-70. In a particular embodiment, R¹ is (C₁-C₃₀)alkyl or (C₄-C₁₂)cycloalkyl. As used herein, the term "(C₁ -C₃₀)alkyl" means a straight or branched alkyl substituent group having from 1 to 30 carbon atoms per group and comprising, for example, methyl, ethyl, n-butyl, sec-butyl, t-butyl, n-propyl, iso-propyl, pentyl, hexyl, heptyl, octyl, nonyl, decyl, undecyl, dodecyl, stearyl, or eicosyl; and the term "(C₄-C₁₂)cycloalkyl" means a cyclic alkyl substituent group having from 4 to 12 carbon atoms per group, comprising, for example, cyclohexyl or cylcooctyl. The term "aryl" means an organic radical derived from an aromatic hydrocarbon by removal of one hydrogen atom, which may optionally be substituted on the aromatic ring with one or more substituent groups. Illustrative examples of aryl groups are phenyl, tolyl, xylyl, and naphthyl.

In a particular embodiment, the fluoropolymer additive is made by emulsion polymerization of one or more monoethylenically unsaturated monomers in the presence of the aqueous fluoropolymer dispersion to form a carrier polymer in the presence of the fluoropolymer. The emulsion is then precipitated, for example, by addition of sulfuric acid. The precipitate is dewatered, for example, by centrifugation, and then dried to form a fluoropolymer additive that comprises fluoropolymer and an associated carrier polymer. The dry emulsion polymerized fluoropolymer additive is typically in the form of a free-flowing powder.

In a particular embodiment, the monoethylenically unsaturated monomers that are emulsion polymerized to form the carrier polymer comprise one or more monomers selected from vinyl aromatic monomers and monoethylenically unsaturated nitrile monomer. In another particular embodiment, the carrier polymer comprises repeating units derived from styrene and acrylonitrile. More particularly, the carrier polymer comprises from 60 wt.% to 90 wt.% repeating units derived from styrene and from 10 wt.% to 40 wt.% repeating units derived from acrylonitrile. The emulsion polymerization reaction is typically initiated using a conventional free radical initiator such as, for example, an organic peroxide compound, such as for example, benzoyl peroxide, a persulfate compound, such as, for example, potassium persulfate, an azonitrile compound such as for example, 2,2'-azobis-2,3,3-trimethylbutyronitrile, or a redox initiator system, such as, for example, a combination of cumene hydroperoxide, ferrous sulfate, tetrasodium pyrophosphate and a reducing sugar or sodium formaldehyde sulfoxylate. A chain transfer agent such as, for example, a (C₉-C₁₃)alkyl mercaptan compound such as, for example, nonyl mercaptan or t-dodecyl mercaptan, may optionally be added to the reaction vessel during the polymerization reaction to reduce the molecular weight of the carrier polymer. In a particular embodiment, no chain transfer agent is used. In another particular embodiment the stabilized fluoropolymer dispersion is charged to a reaction vessel and heated with stirring. The initiator system and the one or more monoethylenically unsaturated monomers are then charged to the reaction vessel and heated to polymerize the monomers in the presence of the fluoropolymer particles of the dispersion to thereby form the carrier polymer. Suitable fluoropolymer additives and emulsion polymerization methods are disclosed, for example, in European Patent Application 0739914.

In another illustrative example of fluoropolymer additive preparation an aqueous dispersion of PTFE fluoropolymer and an aqueous styrene-acrylonitrile resin emulsion may be precipitated to form a fluoropolymer concentrate and then dried to provide a PTFE-comprising fluoropolymer additive as a powder as disclosed in, for example, U.S. Patent No. 4,579,906. Other suitable methods of forming a fluoropolymer additive are disclosed in, for example, U.S. Patent Nos. 4,647,602; 5,539,036; 5,679,741; and 5,681,875.

The compositions of the present invention comprise an intimate mixture of at least one rigid thermoplastic resin and a fluoropolymer additive wherein the fluoropolymer additive is present in an amount effective to provide an increase in modulus or impact strength or both compared to those properties of the same composition prepared without fluoropolymer. The compositions can comprise, based on 100 pbw of the composition, from 75 pbw to 98 pbw, particularly 75 pbw to 97 pbw, more particularly 80 pbw to 96 pbw, and still more particularly from 80 pbw to 95 pbw of the combined thermoplastic resin and carrier polymer and from 2 pbw to 25 pbw, particularly from 3 pbw to 25 pbw, more particularly from 4 pbw to 20 pbw and still more particularly from 5 pbw to 20 pbw of the fluoropolymer.

Thermoplastic resin compositions in embodiments of the present invention may optionally comprise various conventional additives, such as, but not limited to: (1) antioxidants, such as, for example, organophosphites, for example, tris(nonylphenyl)phosphite, (2,4,6-tri-tert-butylphenyl)(2-butyl-2-ethyl-1,3-propanediol)phosphite, bis(2,4-di-t-butylphenyl)pentaerythritol diphosphite or distearyl pentaerythritol diphosphite, as well as alkylated monophenols, polyphenols, alkylated reaction products of polyphenols with dienes, such as, for example, butylated reaction products of para-cresol and dicyclopentadiene, alkylated hydroquinones, hydroxylated thiodiphenyl ethers, alkylidene-bisphenols, benzyl compounds, acylaminophenols, esters of beta-(3,5-di-tert-butyl-4-hydroxyphenol)-propionic acid with monohydric or polyhydric alcohols, esters of beta-(5-tert-butyl-4-hydroxy-3-methylphenyl)-propionic acid with monohydric or polyhydric alcohols, esters of beta-(5-tert-butyl-4-hydroxy-3-methylphenyl) propionic acid with mono-or polyhydric alcohols, esters of thioalkyl or thioaryl compounds, such as, for example, distearylthiopropionate, dilaurylthiopropionate, ditridecylthiodipropionate, or amides of beta-(3,5-di-tert-butyl-4-hydroxyphenol)-propionic acid; (2) UV absorbers and light stabilizers such as, for example, HALS, 2-(2'-hydroxyphenyl)-benzotriazoles, 2-hydroxy-benzophenones, esters of substituted or unsubstituted benzoic acids, acrylates, or nickel compounds; (3) metal deactivators, such as, for example, N,N'-diphenyloxalic acid diamide, or 3-salicyloylamino-1,2,4-triazole; (4) peroxide scavengers, such as, for example, (C₁₀-C₂₀)alkyl esters of beta-thiodipropionic acid, or mercapto benzimidazole; (5) basic co-stabilizers, such as, for example, melamine, polyvinylpyrrolidone, triallyl cyanurate, urea derivatives, hydrazine derivatives, amines, polyamides, or polyurethanes; (6) sterically hindered amines such as, for example, triisopropanol amine or the reaction product of 2,4-dichloro-6-(4-morpholinyl)-1,3,5-triazine with a polymer of 1,6-diamine, or N,N'-bis(2,2,4,6-tetramethyl-4-piperidenyl) hexane; (7) neutralizers such as magnesium stearate, magnesium oxide, zinc oxide, zinc stearate, or hydrotalcite; (8) other additives such as, for example, lubricants such as, for example, pentaerythritol tetrastearate, EBS wax, or silicone fluids, plasticizers, optical brighteners, pigments, dyes, pigments, colorants, flameproofing agents, anti-static agents, or blowing agents; or (9) flame retardant additives such as, for example, halogen-containing organic flame retardant compounds, organophosphate flame retardant compounds, or borate flame retardant compounds. In embodiments of the invention the rigid thermoplastic resins are free of any filler component. In particular embodiments compositions of the invention may further comprise an additive selected from the group consisting of lubricants, neutralizers, stabilizers, heat stabilizers, light stabilizers, antioxidants, UV screeners, UV absorbers, dyes, pigments, colorants, and mixtures thereof.

In one embodiment the compositions of the present invention may be prepared by mixing the rigid thermoplastic resin and the fluoropolymer as described herein to form a first mixture. The mixing can be typically carried out in any conventional mixer like drum mixers, ribbon mixers, vertical spiral mixers, Muller mixers, Henschel mixers, sigma mixers, chaotic mixers, static mixers or the like. The first mixture is then compounded under melt-mixing conditions using any conventional method, such as extrusion kneading or roll kneading, a two-roll mill, in a Banbury mixer or in a single screw or twin-screw extruder, or in any high shear mixing device to mix the components to produce an intimate mixture, and optionally, to reduce the composition so formed to particulate form, for example, by pelletizing or grinding the composition. The twin screw extruder, when employed, can be co-rotating, counter rotating, intermeshing, non-intermeshing, a planetary gear extruder, a co-continuous mixer, or the like. The compounding process can be a continuous, semi-continuous, or a batch process. In other embodiments all or a portion of fluoropolymer either neat or in the form of fluoropolymer additive, itself either neat or combined with a portion of rigid thermoplastic resin, may be added to the composition at some stage of a blending process, such as in an extrusion process. Those of ordinary skill in the art will be able to adjust blending times, as well as component addition location and sequence, without undue additional experimentation. Also optionally, a portion of the rigid thermoplastic resin may be mixed with fluoropolymer or fluoropolymer additive to prepare a master batch, and then the remaining rigid thermoplastic resin may be added and mixed therewith later for multistage mixture.

Compositions in embodiments of the present invention can be formed into useful articles by a variety of means such as injection molding, extrusion molding, profile extrusion, calendering, rotary molding, blow molding, foam molding, or thermoforming. Illustrative articles comprise automotive interior and exterior components, computer and business machine housings, electrical components, home appliances and media storage devices, such as, for example, audiovisual cassettes and disk drive components. Compositions in embodiments of the invention are also useful in sheet and film applications and in articles derived from sheet and film, such as, but not limited to, coextruded, multilayer sheet articles.

Processing temperatures for both compounding the compositions and for forming the compounded compositions into useful articles are typically less than the melting point of the fluoropolymer. In particular embodiments processing temperatures for both compounding the compositions and for forming the compounded compositions into useful articles are typically less than about 325°C. At temperatures above the melting point of the fluoropolymer, the increase in modulus or impact strength or both properties is not as high as is obtained when the compositions are processed at temperatures below the melting point of the fluoropolymer. When the compositions are processed at temperatures below the melting point of the fluoropolymer, the fluoropolymer typically disperses as fibrils into the matrix of rigid thermoplastic resin. Although the invention is not meant to be limited by any theory of operation, it is believed that the presence of fibrils comprising fluoropolymer aids in increasing modulus or impact strength or both properties of the compositions. For example, when test parts comprising compositions in embodiments of the invention comprising PTFE are heated, they typically shrink, and physical properties such as modulus typically decrease, often to the value of that property observed before addition of fluoropolymer. In the test parts so heated, fibrils comprising fluoropolymer may lose their fibril shape as they aggregate into large particles and/or segregate into isolated islands of fluoropolymer.

The following examples are included to provide additional guidance to those skilled in the art in practicing the claimed invention. The examples provided are merely representative of the work that contributes to the teaching of the present application. Accordingly, these examples are not intended to limit the invention, as defined in the appended claims, in any manner.

In the following examples MMASAN comprised structural units derived from 40 wt.% styrene, 35 wt.% MMA, and 25 wt.% acrylonitrile, and had a weight average molecular weight of about 150,000 and a melt volume rate of about 40, determined at 220°C using a 10 kilogram weight. PMMA was ACRYLITE® H-12 poly(methyl methacrylate) obtained from CYRO Industries, Rockaway, New Jersey, and having an average melt flow of 7.0 grams per 10 minutes determined by ASTM D-1238 at 230°C using a 3.8 kilogram weight. PTFE-comprising fluoropolymer additive comprised 50 wt.% PTFE and 50 wt.% SAN as carrier polymer. Amounts of PTFE reported in the following examples refer to PTFE by itself unless otherwise noted. All compositions were compounded and then molded into test parts at processing temperatures of less than 325°C. Tensile properties of molded test parts were determined according to ASTM D-638. Izod impact strength values of molded test parts were determined according to ASTM D-256. Multiaxial impact strength values of molded test parts were determined at room temperature according to ISO 6603-2. The abbreviation "C.Ex." means comparative example.

### COMPARATIVE EXAMPLES 1-4

SAN was obtained from General Electric Plastics, Pittsfield, MA, and comprised structural units derived from 72 wt.% styrene and 28 wt.% acrylonitrile. SAN pellets were compounded with PTFE-comprising fluoropolymer additive powder using standard compounding conditions. The fluoropolymer additive amount was varied to adjust PTFE levels in the final formulations to the amounts as shown in Table 1. Compositions were compounded by extrusion to produce pellets. Pellets were injection molded into standard test parts for physical property measurements. Physical properties are shown in Table 1.

**TABLE 1.**

| Comparative Example | Components | Tensile modulus, megapascals | Notched Izod impact, Joules per meter |
|---|---|---|---|
| C.Ex. 1 | SAN / 5 wt.% PTFE | 5426 | 58.6 |
| C.Ex. 2 | SAN / 10 wt.% PTFE | 6371 | 90.6 |
| C.Ex. 3 | SAN / 15 wt.% PTFE | 6233 | 106 |
| C.Ex. 4 | SAN / 20 wt.% PTFE | 6826 | 197 |

### EXAMPLES 1-4 AND COMPARATIVE EXAMPLE 5

PMMA pellets were compounded with PTFE-comprising fluoropolymer additive using standard compounding conditions. The fluoropolymer additive amount was varied to adjust PTFE levels in the final formulations to the amounts as shown in Table 2. Compositions were compounded by extrusion to produce pellets. Pellets were injection molded into standard test parts for physical property measurements. Physical properties are shown in Table 2.

**TABLE 2.**

| Example or Comparative Example | Components | Tensile modulus, megapascals | Notched Izod impact, Joules per meter | Multiaxial impact strength, Joules |
|---|---|---|---|---|
| C.Ex. 5 | PMMA | 3241 | 26.7 (brittle) | --- |
| Ex. 1 | PMMA / 5 wt.% PTFE | 5102 | 58.6 | 3.22 |
| Ex. 2 | PMMA / 10 wt. % PTFE | 5378 | 85.2 | 4.48 |
| Ex. 3 | PMMA / 15 wt.% PTFE | 7722 | 90.6 | 4.78 |
| Ex. 4 | PMMA / 20 wt.% PTFE | 6205 | 208 | 6.92 |
| | | | | |
| Ex. 5 | 25 wt.% PMMA + 65 wt.% SAN* + 10 wt.% PTFE | 5864 | 90 | --- |
| Ex. 6 | 25 wt.% PMMA + 60 wt.% SAN* + 15 wt.% PTFE | 6037 | 112 | --- |

| | | | | |
|---|---|---|---|---|
| * includes SAN from fluoropolymer additive | | | | |

In comparison to comparative example 5 without PTFE, compositions comprising PTFE with the rigid thermoplastic resin PMMA show an improvement in tensile modulus and, in addition, an improvement in impact strength despite the fact that no rubber component is present in the compositions. Molded test parts comprising PMMA and PTFE also showed smooth surfaces after injection molding. The molded test parts also show good weatherability upon exposure to typical weatherability test conditions.

### EXAMPLES 7-10 AND COMPARATIVE EXAMPLE 6

MMASAN pellets were compounded with PTFE-comprising fluoropolymer additive powder using standard compounding conditions. The fluoropolymer additive amount was varied to adjust PTFE levels in the final formulations to the amounts as shown in Table 3. Compositions were compounded by extrusion to produce pellets. Pellets were injection molded into standard test parts for physical property measurements. Physical properties are shown in Table 3.

**TABLE 3.**

| Example or Comparativ e Example | Components | Tensile modulus, megapascals | Notched Izod impact, Joules per meter | Multiaxial impact strength, Joules |
|---|---|---|---|---|
| C.Ex. 6 | MMASAN | 3516 | 26.7 (brittle) | --- |
| Ex. 7 | MMASAN / 5 wt.% PTFE | 5378 | 58.6 | 5.02 |
| Ex. 8 | MMASAN / 10 wt.% PTFE | 7446 | 149 | 4.98 |
| Ex. 9 | MMASAN / 15 wt.% PTFE | 8136 | 293 | 6.24 |
| Ex. 10 | MMASAN / 20 wt.% PTFE | 7722 | 293 | 8.40 |

In comparison to the comparative example without PTFE, compositions comprising PTFE with the rigid thermoplastic resin MMASAN show a significant improvement in both tensile modulus and impact strength despite the fact that no rubber component is present in the compositions. Surprisingly, the MMASAN compositions with PTFE show a larger increase in tensile modulus and impact strength at comparable loading of PTFE than do blends of PTFE with either polymeric component of MMASAN by itself (i.e. PTFE blends with PMMA and with SAN). Note particularly the properties of examples 8 and 9 compared to those of examples 2 and 3 and comparative examples 2 and 3. Molded test parts comprising MMASAN and PTFE also showed smooth surfaces after injection molding. The molded test parts also show good weatherability upon exposure to typical weatherability test conditions.

### EXAMPLE 11 AND COMPARATIVE EXAMPLE 7

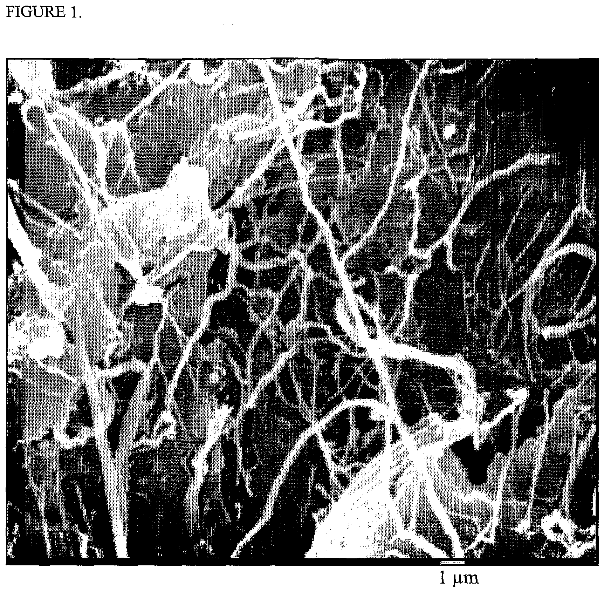

A composition comprising PMMA and 5 wt.% PTFE (derived from the fluoropolymer additive) was formed into test parts at processing temperatures of less than about 325°C. Figure 1 shows a micrograph of the composition which shows the presence of fibrils comprising PTFE. The modulus of the test part was higher than that observed in a similar composition without PTFE. For comparison a test part comprising a similar composition was heated. The test part showed shrinkage compared to the original test part.

### EXAMPLE 12 AND COMPARATIVE EXAMPLE 8

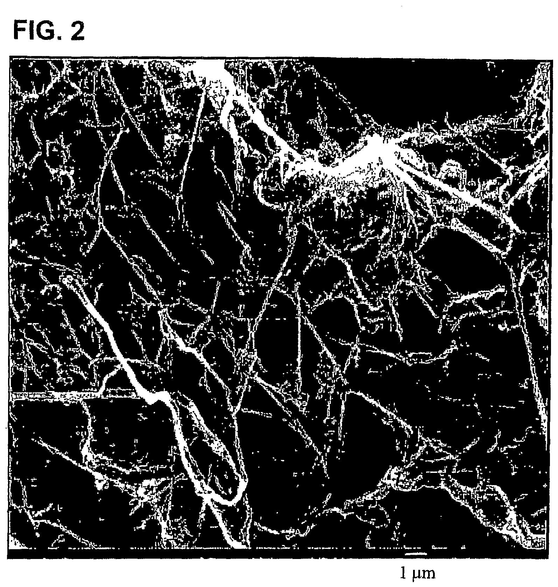

A composition comprising MMASAN and 5 wt.% PTFE (derived from the fluoropolymer additive) was formed into test parts at processing temperatures of less than about 325°C. Figure 2 shows a micrograph of the composition which shows the presence of fibrils comprising PTFE. The modulus of the test part was higher than that observed in a similar composition without PTFE. For comparison a test sample of a related composition comprising MMASAN and PTFE was heated and the modulus value measured both before and after heating. The modulus value for the test sample so heated had decreased by about 40% compared to the value observed before heating.

## Claims

1. A composition comprising:
(i) a rigid thermoplastic resin comprising structural units derived from a (C₁-C₁₂)alkyl (meth)acrylate monomer, and optionally a second monomer selected from the group consisting of a vinyl aromatic monomer, a monoethylenically unsaturated nitrile monomer and mixtures thereof, and
(ii) a fluoropolymer additive comprising 30 wt.% to 70 wt.% of a fluoropolymer and 70 wt.% to 30 wt.% of a carrier polymer comprising structural units derived from a vinyl aromatic monomer, a monoethylenically unsaturated nitrile monomer, or mixtures thereof, wherein the amount of fluoropolymers present in the composition is in a range of 2 parts by weight to 25 parts by weight based on 100 parts by weight of the composition, and wherein the composition is free of both any rubber component and any filler,

2. The composition of claim 1, wherein the structural units of the rigid thermoplastic resin are derived from methyl methacrylate,

3. The composition of claim 1 or 2, wherein the structural units of the rigid thermoplastic resin are derived from methyl methacrylate, styrene, and acrylonitrile,

4. The compositions of any of claims 1 to 3, wherein the composition further comprises styrene-acrylonitrile copolymer.

5. The composition of any of claims 1 to 4 wherein the fluoropolymer is polytetrafluoroethylene and the carrier polymer is selected from the group consisting of polystyrene, poly-alpha-alkylstyrene, poly-alpha-methylstyrene, maleic anhydride-modified styrenic polymers, styrene/maleic anhydride copolymers, maleimide-modified styrenic polymers, styrene/N-aryl maleimide copolymers, styrene/N-phenyl maleimide copolymers, styrene/acrylonitrile copolymers, alpha-alkylstysene/acrylonitrile copolymers, alpha-methylstyrene/acrylonitrile copolymers, styrene/alpha-alkylstyrene/acrylonitrile copolymers, styrene/alpha-methylstyrene/acrylonitrile copolymers, styrene/acrylonitrile/methyl methacrylate copolymers, styrene/alpha-alkylstyrene/acrylonitrile/methyl methacrylate copolymers, styrene/alpha-methylstyrene/acrylonitrile/methyl methacrylate copolymers, alpha-alkylstyrene/acrylonitrile/methyl methacrylate copolymers, and alpha-methylstyrene/acrylonitrile/methyl methacrylate copolymers.

6. The composition of any of claims 1 to 5 further comprising an additive selected from the group consisting of lubricants, neutralizers, stabilizers, heat stabilizers, light stabilizers, antioxidants, UV screeners, UV absorbers, dyes, pigments, colorants, and mixtures thereof.

7. The composition of any of claims 1 to 6, wherein the composition is processed at a temperature less than the melting point of the fluoropolymer, and the fluoropolymer is at least partially dispersed in the composition as fibrils after processing of the composition.

8. An article formed from the composition of claims 1 to 7.

9. A method for increasing either the modulus or the impact strength of a composition comprising a rigid thermoplastic resin comprising structural units derived from a (C₁-C₁₂)alkyl (meth)acrylate monomer, and optionally a second monomer selected from the group consisting of a vinyl aromatic monomer, a monoethylenically unsaturated nitrile monomer and mixtures thereof, which comprises the steps of:
(i) combining the composition with a fluoropolymer additive comprising 30 wt.% to 70 wt.% of a fluoropolymer and 70 wt.% to 30 wt.% of a carrier polymer comprising structural units derived from a vinyl aromatic monomer, a monoethylenically unsaturated nitrile monomer, or mixtures thereof, wherein the amount of fluoropolymer present in the composition is in a range of from 2 parts by weight to 25 parts by weight based on 100 parts by weight of the composition, and
(ii) processing the composition from (i) at a temperature less than the melting point of the fluoropolymer; wherein the composition is free of both any rubber component and any filler.

10. The method of claim 9, wherein the composition is processed at a temperature of less than about 325°C.

11. The method of claim 9 or 10, wherein the structural units of the rigid thermoplastic resin are derived from methyl methacrylate.

12. The method of any of claims 9 to 11, wherein the structural units of the rigid thermoplastic resin are derived from methyl methacrylate, styrene, and acrylonitrile,

13. The method of any of claims 9 to 12, wherein the composition further comprises styrene-acrylonitrile copolymer.

14. The method of any of claims 9 to 13, wherein the fluoropolymer is polytetrafluoroethylene and the carrier polymer is selected from the group consisting of polystyrene, poly-alpha-alkylstyrene, poly-alpha-methylstyrene, maleic anhydride-modified styrenic polymers, styrene/maleic anhydride copolymers, maleimide-modified styrenic polymers, styrene/N-aryl maleimide copolymers, styrene/N-phenyl maleimide copolymers, styrene/acrylonitrile copolymers, alpha-alkylstyrene/acrylonitrile copolymers, alpha-methylstyrene/acrylonitrile copolymers, styrene/alpha-alkylstyrene/acrylonitrile copolymers, styrene/alpha-methylstyrene/acrylonitrile copolymers, styrene/acrylonitrile/methyl methacrylate copolymers, styrene/alpha-alkylstyrene/acrylonitrile/methyl methacrylate copolymers, styrene/alpha-methylstyrene/acrylonitrile/methyl methacrylate copolymers, alpha-alkylstyrene/acrylonitrile/methyl methacrylate copolymers, and alpha-methylstyrene/acrylonitrile/methyl methacrylate copolymers.

15. The method of any of claims 9 to 14, wherein the fluoropolymer is at least partially dispersed in the composition as fibrils after processing of the composition.

## Patentansprüche

1. Eine Zusammensetzung, die Folgendes umfasst:
(i) ein festes thermoplastisches Harz umfassend strukturelle Einheiten abgeleitet von einem (C₁-C₁₂)Alkyl (Meth)acrylatmonomer, und wahlweise ein zweites Monomer gewählt aus der Gruppe bestehend aus einem aromatischen Vinylmonomer, einem monoethylenisch ungesättigten Nitrilmonomer und Mischungen daraus, und
(ii) ein Fluorpolymer-Zusatzstoff umfassend 30 Gewichts% bis 70 Gewichts% eines Fluorpolymers und 70 Gewichts% bis 30 Gewichts% eines Trägerpolymers umfassend strukturelle Einheiten abgeleitet von einem aromatischen Vinylmonomer, einem monoethylenisch ungesättigten Nitrilmonomer, oder Mischungen daraus, worin die Menge an Fluorpolymer, die in der Zusammensetzung vorhanden ist, in einem Bereich von 2 Gewichtsteilen bis 25 Gewichtsteilen basierend auf 100 Gewichtsteilen der Zusammensetzung liegt, und worin die Zusammensetzung frei ist von sowohl jeglicher Gummikomponente als auch jeglichem Füllstoff.

2. Die Zusammensetzung gemäß Anspruch 1, worin die strukturellen Einheiten des festen thermoplastischen Harzes von Methylmethacrylat abgeleitet sind.

3. Die Zusammensetzung gemäß Anspruch 1 oder 2, worin die strukturellen Einheiten des festen thermoplastischen Harzes von Methylmethacrylat, Styren, und Acrylnitril abgeleitet sind.

4. Die Zusammensetzung gemäß irgendeinem der Ansprüche 1 bis 3, worin die Zusammensetzung weiter Styren-Acrylnitril-Copolymer umfasst.

5. Die Zusammensetzung gemäß irgendeinem der Ansprüche 1 bis 4,
worin das Fluorpolymer Polytetrafluoroethylen ist und das Trägerpolymer gewählt ist aus der Gruppe bestehend aus Polystyren, Poly-alpha-Alkylstyren, Poly-alpha-Methylstyren, Maleinsäureanhydrid-modifizierten styrenischen Polymeren, Styren/Maleinsäureanhydrid-Copolymeren, Maleimid-modifizierten styrenischen Polymeren, Styren/N-Arylmaleimid-Copolymeren, Styren/N-Phenylmaleimid-Copolymeren, Styren/Acrylnitril-Copolymeren, alpha-Alkylstyren/Acrylnitril-Copolymeren, alpha-Methylstyren/Acrylnitril-Copolymeren, Styren/alpha-Alkylstyren/Acrylnitril-Copolymeren, Styren/alpha-Methylstyren/Acrylnitril-Copolymeren, Styren/Acrylnitril/Methylmethacrylat-Copolymeren, Styren/alpha-Alkylstyren/Acrylnitril/Methylmethacrylat-Copolymeren, Styren/alpha-Methylstyren/Acrylnitril/Methylmethacrylat-Copolymeren, alpha-Alkylstyren/Acrylnitril/Methylmethacrylat-Copolymeren, und alpha-Methylstyren/Acrylnitril/Methylmethacrylat-Copolymeren.

6. Die Zusammensetzung gemäß irgendeinem der Ansprüche 1 bis 5, weiter umfassend einen Zusatzstoff gewählt aus der Gruppe bestehend aus Schmiermitteln, Neutralisationsmitteln, Stabilisatoren, Hitzestabilisatoren, Lichtstabilisatoren, Antioxidantien, UV-Screenern, UV-Absorbern, Farbstoffen, Pigmenten, Farbmitteln, und Mischungen daraus.

7. Die Zusammensetzung gemäß irgendeinem der Ansprüche 1 bis 6, worin die Zusammensetzung bei einer Temperatur geringer als der Schmelzpunkt des Fluorpolymers verarbeitet wird, und das Fluorpolymer mindestens teilweise in der Zusammensetzung als Fibrillen dispergiert ist nach Verarbeitung der Zusammensetzung.

8. Ein Artikel gebildet aus der Zusammensetzung gemäß Ansprüchen 1 bis 7.

9. Ein Verfahren zur Erhöhung von entweder dem Modul oder der Schlagfestigkeit einer Zusammensetzung umfassend ein festes thermoplastisches Harz umfassend strukturelle Einheiten abgeleitet von einem (C₁-C₁₂)Alkyl (Meth)acrylatmonomer, und wahlweise ein zweites Monomer gewählt aus der Gruppe bestehend aus einem aromatischen Vinylmonomer, einem monoethylenisch ungesättigten Nitrilmonomer und Mischungen daraus, welches die folgenden Schritte umfasst:
(i) Vermengen der Zusammensetzung mit einem Fluorpolymer-Zusatzstoff umfassend 30 Gewichts% bis 70 Gewichts% eines Fluorpolymers und 70 Gewichts% bis 30 Gewichts% eines Trägerpolymers umfassend strukturelle Einheiten abgeleitet von einem aromatischen Vinylmonomer, einem monoethylenisch ungesättigten Nitrilmonomer, oder Mischungen daraus, worin die Menge an Fluorpolymer, die in der Zusammensetzung vorhanden ist, in einem Bereich von 2 Gewichtsteilen bis 25 Gewichtsteilen basierend auf 100 Gewichtsteilen der Zusammensetzung liegt, und
(ii) Verarbeiten der Zusammensetzung von (i) bei einer Temperatur geringer als der Schmelzpunkt des Fluorpolymers; worin die Zusammensetzung frei ist von sowohl jeglicher Gummikomponente als auch jeglichem Füllstoff,

10. Das Verfahren gemäß Anspruch 9, worin die Zusammensetzung bei einer Temperatur von weniger als 325°C verarbeitet wird.

11. Das Verfahren gemäß Anspruch 9 oder 10, worin die strukturellen Einheiten des festen thermoplastischen Harzes von Methylmethacrylat abgeleitet sind.

12. Das Verfahren gemäß irgendeinem der Ansprüche 9 bis 11, worin die strukturellen Einheiten des festen thermoplastischen Harzes von Methylmethacrylat, Styren, und Acrylnitril abgeleitet sind.

13. Das Verfahren gemäß irgendeinem der Ansprüche 9 bis 12, worin die Zusammensetzung weiter Styren-Acrylnitril-Copolymer umfasst.

14. Das Verfahren gemäß irgendeinem der Ansprüche 9 bis 13, worin das Fluorpolymer Polytetrafluoroethylen ist, und das Tragerpolymer ist gewählt aus der Gruppe bestehend aus Polystyren, Poly-alpha-Alkylstyren, Poly-alpha-Methylstyren, Maleinsäureanhydrid-modifizierten styrenischen Polymeren, Styren/Maleinsäureanhydrid-Copolymeren, Maleimid-modifizierten styrenischen Polymeren, Styren/N-Arylmaleimid-Copolymeren, Styren/N-Phenylmaleimid-Copolymeren, Styren/Acrylnitril-Copolymeren, alpha-Alkylstyren/Acrylnitril-Copolymeren, alpha-Methylstyren/Acrylnitril-Copolymeren, Styren/alpha-Alkylstyren/Acrylnitril-Copolymeren, Styren/alpha-Methylstyren/Acrylnitril-Copolymeren, Styren/Acrylnitril/Methylmethacrylat-Copolymeren, Styren/alpha-Alkylstyren/Acrylnitril/Methylmethacrylat-Copolymeren, Styren/alpha-Methylstyren/Acrylnitril/Methylmethacrylat-Copolymeren, alpha-Alkylstyren/Acrylnitril/Methylmethacrylat-Copolymeren, und alpha-Methylstyren/Acrylnitril/Methylmethacrylat-Copolymeren.

15. Das Verfahren gemäß irgendeinem der Ansprüche 9 bis 14, worin das Fluorpolymer mindestens teilweise in der Zusammensetzung als Fibrillen dispergiert ist nach Verarbeitung der Zusammensetzung.

## Revendications

1. Composition comprenant :
(i) une résine thermoplastique rigide comprenant des motifs structuraux dérivés d'un monomère de (méth)acrylate d'alkyle (en C₁ à C₁₂), et facultativement d'un second monomère choisi dans le groupe constitué d'un monomère vinylaromatique, d'un monomère de nitrile monoéthyléniquement insaturé et des mélanges de ceux-ci, et
(ii) un additif de fluoropolymère comprenant de 30 % en poids à 70 % en poids d'un fluoropolymère et de 70 % en poids à 30 % en poids d'un polymère vecteur comprenant des motifs structuraux dérivés d'un monomère vinylaromatique, d'un monomère de nitrile monoéthyléniquement insaturé, ou de mélanges de ceux-ci, la quantité de fluoropolymère présente dans la composition étant dans une plage de 2 parties en poids à 25 parties en poids sur la base de 100 parties en poids de la composition, et la composition étant exempte à la fois de tout composant caoutchouteux et de toute charge.

2. Composition selon la revendication 1, dans laquelle les motifs structuraux de la résine thermoplastique rigide sont dérivés de methacrylate de méthyle,

3. Composition selon la revendication 1 ou 2, dans laquelle les motifs structuraux de la résine thermoplastique rigide sont dérivés de méthacrylate de méthyle, de styrène et d'acrylonitrile.

4. Composition selon l'une quelconque des revendications 1 à 3, dans laquelle la composition comprend en outre un copolymère de styrène-acrylonitrile,

5. Composition selon l'une quelconque des revendications 1 à 4 dans laquelle le fluoropolymère est un polytétrafluoroéthylène et le polymère vecteur est choisi dans le groupe constitué du polystyrène, du poly-alpha-alkylstyrène, du poly-alpha-méthylstyrène, des polymères styréniques modifiés par de l'anhydride maléique, des copolymères de styrène/anhydride maléique, des polymères styréniques modifiés par du maléimide, des copolymères de styrène/N-aryl-maléimide, des copolymères de styrène/N-phényl-maléimide, des copolymères de styrène/acrylonitrile, des copolymères d'alpha-alkylstyrène/acrylonitrile, des copolymères d'alpha-méthylstyrène/acrylonitrile, des copolymères de styrène/alpha-alkylstyrène/acrylonitrile, des copolymères de styrène/alpha-méthylstyrène/acrylonitrile, des copolymères de styrène/acrylonitrile/méthacrylate de méthyle, des copolymères de styrène/alpha-alkylstyrène/acrylonitrile/méthacrylate de méthyle, des copolymères de styrène/alpha-méthylstyrène/acrylonitrile/méthacrylate de méthyle, des copolymères d'alpha-alkylstyrène/acrylonitrile/méthacrylate de méthyle et des copolymères d'alpha-méthylstyrène/acrylonitrile/méthacrylate de méthyle,

6. Composition selon l'une quelconque des revendications 1 à 5 comprenant en outre un additif choisi dans le groupe constitué des lubrifiants, des neutralisants, des stabilisants, des stabilisants thermiques, des photo stabilisants, des antioxydants, des agents de protection contre les UV, des absorbeurs UV, des teintures, des pigments, des colorants et des mélanges de ceux-ci.

7. Composition selon l'une quelconque des revendications 1 à 6, dans laquelle la composition est traitée à une température inférieure au point de fusion du fluoropolymère et le fluoropolymère est au moins partiellement dispersé dans la composition sous la forme de fibrilles après le traitement de la composition.

8. Article formé à partir de la composition selon les revendications 1 à 7.

9. Procédé d'augmentation du module ou bien de la résistance aux chocs d'une composition comprenant une résine thermoplastique rigide comprenant des motifs structuraux dérivés d'un monomère de (méth)acrylate d'alkyle (en C₁ à C₁₂), et facultativement d'un second monomère choisi dans le groupe constitué d'un monomère vinylaromatique, d'un monomère de nitrile monoéthyléniquement insaturé et des mélanges de ceux-ci, qui comprend les étapes de
(i) combinaison de la composition avec un additif de fluoropolymère comprenant de 30 % en poids à 70 % en poids d'un fluoropolymère et de 70 % en poids à 30 % en poids d'un polymère vecteur comprenant des motifs structuraux dérivés d'un monomère vinylaromatique, d'un monomère de nitrile monoéthyléniquement insaturé, ou de mélanges de ceux-ci, la quantité de fluoropolymère présente dans la composition étant dans une plage de 2 parties en poids à 25 parties en poids sur la base de 100 parties en poids de la composition, et
(ii) traitement de la composition de (i) à une température inférieure au point de fusion du fluoropolymère, la composition étant exempte à la fois de tout composant caoutchouteux et de toute charge.

10. Procédé selon la revendication 9, dans lequel la composition est traitée à une température inférieure à environ 325 °C.

11. Procédé selon la revendication 9 ou 10, dans lequel les motifs structuraux de la résine thermoplastique rigide sont dérivés de méthacrylate de méthyle.

12. Procédé selon l'une quelconque des revendications 9 à 11, dans lequel les motifs structuraux de la résine thermoplastique rigide sont dérivés de méthacrylate de méthyle, de styrène et d'acrylonitrile.

13. Procédé selon l'une quelconque des revendications 9 12, dans lequel la composition comprend en outre un copolymère de styrène-acrylonitrile.

14. Procédé selon l'une quelconque des revendications 9 à 13, dans lequel le fluoropolymère est un polytétrafluoroéthylène et le polymère vecteur est choisi dans le groupe constitué du polystyrène, du poly-alpha-alkylstyrène, du poly-alpha-méthylstyrène, des polymères styréniques modifiés par de l'anhydride maléique, des copolymères de styrène/anhydride maléique, des polymères styréniques modifiés par du maléimide, des copolymères de styrène/N-aryl-maléimide, des copolymères de styrène/N-phényl-maléimide, des copolymères de styrène/acrylonitrile, des copolymères d'alpha-alkylstyrène/acrylonitrile, des copolymères d'alpha-méthylstyrène/acrylonitrile, des copolymères de styrène/alpha-alkylstyrène/acrylonitrile, des copolymères de styrène/alpha-méthylstyrène/acrylonitrile, des copolymères de styrène/acrylonitrile/méthacrylate de méthyle, des copolymères de styrène/alpha-alkylstyrène/acrylonitrile/méthacrylate de méthyle, des copolymères de styrène/alpha-méthylstyrène/acrylonitrile/méthacrylate de méthyle, des copolymères d'alpha-alkylstyrène/acrylonitrile/méthacrylate de méthyle et des copolymères d'alpha-méthylstyrène/acrylonitrile/méthacrylate, de méthyle.

15. Procédé selon l'une quelconque des revendications 9 à 14, dans lequel le fluoropolymère est au moins partiellement dispersé dans la composition sous la forme de fibrilles après le traitement de la composition,
